# EUROPÄISCHE PATENTSCHRIFT

(11) **EP 2 898 267 B1**
(45) Veröffentlichungstag und Bekanntmachung des Hinweises auf die Patenterteilung: **01.05.2019**
(21) Anmeldenummer: 13762094.4
(22) Anmeldetag: 09.09.2013
(51) Int. Cl.: F23D 14/72, F23K 5/04, F23N 1/00, F23N 5/20, F23N 5/24, B60H 1/22

(54) **HEIZSYSTEM UND VERFAHREN ZUR AUTOMATISCHEN LEITUNGSBEFÜLLUNG**
HEATING SYSTEM AND METHOD FOR AUTOMATIC LINE FILLING
SYSTÈME DE CHAUFFAGE À REMPLISSAGE AUTOMATIQUE DES CONDUITES

(30) Priorität: 19.09.2012 DE 102012216826
(43) Veröffentlichungstag der Anmeldung: 29.07.2015
(73) Patentinhaber: Webasto SE, 82131 Stockdorf (DE)
(72) Erfinder: KOMUSANAC, Drago, 81379 München (DE); PANNWITZ, Thorsten, 82110 Germering (DE); LUDWIG, Andreas, 82377 Penzberg (DE)
(74) Vertreter: Schumacher & Willsau
(86) Internationale Anmeldenummer: PCT/EP2013/068635
(87) Internationale Veröffentlichungsnummer: WO 2014/044570

(56) Entgegenhaltungen:
- EP-A2- 1 645 803
- DE-A1-102008 022 084
- DE-C1- 4 323 221

## Beschreibung

Die Erfindung betrifft ein Heizsystem und ein Verfahren zur automatischen Leitungsfüllung in Abhängigkeit einer Flammerkennung sowie eine Verwendung der Flammerkennung eines derartigen Heizsystems.

Gattungsgemäße Heizsysteme sind beispielsweise in der DE 199 01 708 A1, der EP 1 752 708 A2 und der EP 1 645 803 A2 beschrieben, wobei die EP 1 645 803 A2 den Oberbegriff der Ansprüche 1 und 5 zeigt. Sie werden in unterschiedlichen Varianten eingesetzt, vorwiegend als Standheizung oder als Zuheizer, wobei für eine Brennstoffzufuhr Fluidleitungen vorgesehen sind. Die Vielfalt an Einsatzmöglichkeiten der Heizsysteme führt zu variabel anzupassenden Leitungslängen und Leitungsdurchmessern, aber auch zu unterschiedlichen Dimensionierungen der übrigen Heizsystemkomponenten wie dem Heizgerät oder der Dosierpumpe, so dass variable Innenvolumina hauptsächlich in den Fluidleitungen, aber auch in der Dosierpumpe und dem Heizgerät vorliegen. Dies führt zu Problemen bei der Qualitätssicherung am Bandende des Herstellungsprozesses der Heizsysteme und bei der Umstellung von einem Sommerbetrieb auf einen Winterbetrieb im bereits eingebauten Zustand des Heizsystems.

Zur Qualitätssicherung werden am Bandende Funktionsprüfungen des Heizgeräts durchgeführt. Dabei wird dem Steuergerät manuell die Einleitung einer sogenannten Diagnoseroutine aufgetragen, wodurch die Fluidleitungen vor der eigentlichen Diagnose des Heizsystems durch die Dosierpumpe mit Brennstoff gefüllt werden. Aufgrund der Vielzahl der Varianten der Heizsysteme wäre eine individuelle Programmierung jeder Variante in das Steuergerät zur präzisen Steuerung der die Fluidleitungen füllenden Dosierpumpe sehr aufwendig. Hingegen stellen Sensoren zur Überwachung des Füllstandes in den Fluidleitungen einen hohen Kostenfaktor des Heizsystems dar. Um die individuelle Programmierung oder den Einbau der Sensoren zu vermeiden, wird derzeit der Füllstand der Fluidleitungen vor der Diagnose des Heizsystems manuell überwacht, was als befriedigende Lösung angesehen wird.

Aus der EP 1 645 803 A2 ist ein Verfahren zum Starten eines Heizgerätes bekannt. Hierbei wird in einer ersten Zündphase Brennstoff mit einer ersten Zünd-Fördermenge in das Heizgerät eingespeist und dann, wenn vor Ablauf einer maximalen Zeitdauer der ersten Zündphase eine Zündung erkannt wird, eine Stabilisierungsphase gestartet, in welcher Brennstoff mit einer Stabilisierungs-Fördermenge in das Heizgerät eingespeist wird. Wenn vor Ablauf der maximalen Zeitdauer der ersten Zündphase keine Zündung erkannt wird, wird eine zweite Zündphase gestartet, in welcher Brennstoff mit einer zweiten Zünd-Fördermenge in das Heizgerät eingespeist wird, wobei die zweite Zünd-Fördermenge kleiner ist, als die erste Zünd-Fördermenge und als die Stabilisierungs-Fördermenge.

Die DE 43 23 221 C1 beschreibt ebenfalls ein Verfahren zum Starten eines brennerbetriebenen Heizgerätes, wobei dessen Brenner mittels eines Brennluftgebläses Brennluft und mittels einer Brennstoff-Fördereinrichtung Brennstoff zur Bildung eines brennbaren Gemisches zugeführt werden. Das Heizgerät verfügt ferner über eine Glüheinrichtung zur Verdampfung des Brennstoffes während einer Startphase des Brenners und einen Flammwächter, der bei Erkennen einer Flammbildung ein Signal an ein zugeordnetes Steuergerät abgibt. Das Steuergerät steuert Drehzahl beziehungsweise Frequenz des Brennluftgebläses und der Brennstoff-Fördereinrichtung sowie den Betrieb der Glüheinrichtung. Um ein besonders sicheres Startverhalten zu erhalten, wird während des Zündzeitraumes in der Startphase mittels des Steuergerätes die Drehzahl des Brennluftgebläses bei konstanter Brennstoff-Förderung angehoben. Die Anhebung der Drehzahl erfolgt vorzugsweise kontinuierlich, und das dadurch variierende Brennstoff-Brennluft-Verhältnis gewährleistet das Erreichen eines für die Zündung geeigneten Betriebspunktes. Es ist ferner vorgesehen, dass die Glüheinrichtung vom Beginn der Startphase bis mindestens zum Erreichen der vollen Brennstoff-Förderung beziehungsweise der vollen Drehzahl des Brennluftgebläses in Betrieb bleibt.

Es ist eine Aufgabe der Erfindung, einen Füllstand in den Fluidleitungen des Heizsystems sicher zu erkennen, ohne dass zusätzliche Sensoren vorzusehen oder unterschiedliche Varianten des Heizsystems in das Steuergerät einzeln einzuprogrammieren sind.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Ein Heizsystem mit Flammerkennung umfasst ein Heizgerät und eine mit dem Heizgerät in Fluidverbindung stehende Dosierpumpe, so dass ein Brennstoff zumindest bei einem Leitungsfüllvorgang zu dem Heizgerät förderbar ist. Das Heizsystem weist ferner ein Steuergerät zur Steuerung des Heizgeräts und der Dosierpumpe auf, wobei das Steuergerät die Dosierpumpe in Abhängigkeit der Flammerkennung während des Leitungsfüllvorgangs steuert. Dies hat den Vorteil, dass unabhängig von zusätzlichen Sensoren zur Messung des Füllstandes oder von einem manuellen Überwachen des Füllstandes eine Aussage über eine gefüllte Leitung getroffen werden kann. Nach der Flammerkennung beendet das Steuergerät durch Steuern der Dosierpumpe den Leitungsfüllvorgang, so dass es vorteilhaft nicht zu einem Überfüllen der Leitung und damit zu einer schlechten Brennstoffkonzentration in dem Heizgerät kommt. Somit wird vorteilhaft vermieden, dass übermäßig viel Brennstoff in das Heizgerät gelangt. Die Leitungsbefüllung mit Flammerkennung umfasst vorteilhafterweise eine Brennluftzufuhr, insbesondere durch Betrieb eines Brennluftgebläses. Die Brennluft wird vorteilhaft mit dem Brennstoff vermischt, wobei das Brennluft-Brennstoffgemisch durch Erhitzen gezündet wird. Vorzugsweise erfolgt die Flammerkennung durch einen Sensor des Heizgeräts. Der Sensor kann beispielsweise ein Temperatur-, Druck-, Strömungsgeschwindigkeits-, Durchfluss-, Partikelraten-, oder Partikeldichtesensor sein. Es versteht sich, dass auch eine Mehrzahl an Sensoren vorgesehen sein kann. Beispielsweise kann eine Mehrzahl an Temperatursensoren vorgesehen sein. Aber auch Kombinationen von Sensoren sind möglich. So können ein Temperatursensor und ein Drucksensor vorgesehen sein. Der Sensor ist dabei vorzugsweise mit dem Steuergerät durch einen elektronischen Anschluss oder eine elektrische Leitung verbunden. Zur Bereitstellung der Fluidverbindung ist vorzugsweise eine Fluidleitung zwischen der Dosierpumpe und dem Heizgerät vorgesehen. Die Dosierpumpe kann beispielsweise eine Hubkolbenpumpe, Zahnradpumpe oder Membranpumpe sein, wobei das Steuergerät die Dosierpumpe über eine elektronische Leitung, beispielsweise über einen CAN- oder LIN-Bus steuern kann. Die Dosierpumpe kann einen elektrischen Antrieb, beispielsweise eine Spule mit einem Anker und einem Hubkolben oder einen Elektromotor aufweisen. Es kann vorgesehen sein, dass das Steuergerät den Antrieb direkt steuert. Gleichzeitig kann eine die Dosierpumpe eigene Leistungsdaten, wie erbrachte Leistung, Drehzahl oder Frequenz an das Steuergerät übertragen bzw. können diese Daten von dem Steuergerät ausgelesen werden. Das Steuergerät kann das Heizgerät und die Dosierpumpe gleichzeitig steuern. Hierdurch kann vorteilhaft eine Abstimmung des Heizgeräts und der Dosierpumpe erfolgen. Das Steuergerät kann in dem Heizgerät integriert sein. Hierdurch bilden das Heizgerät und das Steuergerät vorteilhaft eine Einheit. Es kann aber auch vorgesehen sein, dass das Steuergerät außerhalb des Heizgerätes, vorzugsweise als separate Einheit oder Teil eines Steuersystems ausgebildet ist.

Erfindungsgemäß ist ein Wert eines minimalen Füllvolumens dem Steuergerät vorgegeben, wobei der Leitungsfüllvorgang nach einem Erreichen des minimalen Füllvolumens in Abhängigkeit von der Flammerkennung erfolgt. Das minimale Füllvolumen ist vorzugsweise das kleinste Füllvolumen aller Varianten, in denen das Heizsystem zum Einsatz kommt. Dabei ist das Füllvolumen und das minimale Füllvolumen vorzugsweise das mit Brennstoff zu füllende Innenvolumen von Fluidleitungen zwischen den Komponenten des Heizsystems, wie beispielsweise zwischen dem Heizgerät und der Dosierpumpe oder der Dosierpumpe und einem Tank. Das Fluidvolumen kann aber auch das Innenvolumen der Dosierpumpe und zumindest Teile des Innenvolumens des Heizgeräts umfassen. Dadurch, dass der Leitungsfüllvorgang zunächst in Abhängigkeit eines fest vorgegebenen Wertes erfolgt, kann die Pumpleistung der Dosierpumpe schnell angehoben werden, so dass der Leitungsfüllvorgang schneller abgeschlossen werden kann.

In einer vorteilhaften Ausgestaltung ist eine Stillstandzeit durch einen Zeitmesser zwischen einem früheren Heizvorgang und einem Einleiten des Leitungsfüllvorgangs des Heizsystems speicherbar, wobei das Steuergerät die Dosierpumpe in Abhängigkeit der Stillstandzeit steuert. Insbesondere Standheizungssysteme werden witterungsbedingt hauptsächlich in den Wintermonaten eingesetzt. In den Sommermonaten hingegen werden zusätzliche Heizsysteme eher selten verwendet. Somit wird häufig während der Sommermonate kein Brennstoff durch die Dosierpumpe gefördert. Aufgrund von Umgebungseinflüssen wie Temperatur- und Druckschwankungen verflüchtigt sich ein Teil des Brennstoffes in den Fluidleitungen, d.h. die Fluidleitungen "fallen trocken". Beim Erststart im Winter kann dann der Fall eintreten, dass das Heizungssystem mehrere Startversuche benötigt, bis die Zündung und der eigentliche Heizvorgang erfolgen kann. Dabei kann der Fahrer des Fahrzeugs auf einen Defekt schließen und die Werkstatt aufsuchen. Bei Heizsystemen mit automatischer Fehlererkennung kann dies mitunter dahin führen, dass die wegen der Fail-Safe Philosophie verwendeten Sicherheitsprogramme des Steuergeräts aufgrund der hohen Zahl von Startversuchen das Heizsystem in einen Störmodus zur vermeintlichen Schadensminimierung versetzen, wobei aber kein Fehler vorliegt. Die Folge sind jeweils unnötige an dem Heizsystem durchgeführte Wartungschecks und - arbeiten. Durch die erwähnte Speicherung der Stillstandzeit und die davon abhängige Steuerung der Dosierpumpe ist eine Möglichkeit geschaffen, die Zeit in der die Fluidleitungen Brennstoff verlieren, ohne dass es zu einer Förderung durch die Dosierpumpe kommt, zu erfassen und in der Steuerung des Heizgeräts und der Dosierpumpe zu berücksichtigen. Es kann mitunter vorgesehen sein, dass die Flammerkennung nur bei einem Überschreiten einer vorgegebenen Stillstandzeit von dem Steuergerät berücksichtigt wird.

In einer vorteilhaften Weiterbildung ist ein Störmodus zur Schadensreduzierung durch das Steuergerät einleitbar, so dass bei zu häufigen Startversuchen oder bei kritischen, von einem Sensor gemessen Werten das Heizsystem, insbesondere die Dosierpumpe und das Heizgerät, von dem Steuergerät abgeschaltet werden können. Der Störmodus kann aber auch einen eingeschränkten Betrieb in Bezug auf Leistung, Frequenz oder Drehzahl aktiver Komponenten des Heizsystems umfassen. Die aktiven Komponenten des Heizsystems sind das Heizgerät und die Dosierpumpe. Bei Überschreiten eines vorgegebenen minimalen Wertes der Stillstandzeit kann der Störmodus durch das Steuergerät ausgesetzt sein. Es kann auch vorgesehen sein, bei Überschreiten des vorgegebenen minimalen Wertes der Stillstandzeit den Störmodus bei einer höheren Zahl an Startversuchen oder geänderten kritischen Werten durch das Steuergerät auszulösen. Die geänderten kritischen Werte können ein höherer oder niedrigerer Druck sein, eine höhere oder niedrigere Temperatur, eine höhere oder niedrigere Strömungsgeschwindigkeit, eine höhere oder niedrigere Durchflussrate, und/oder eine höhere oder niedrigere Partikelzahl und/oder -dichte.

Es kann vorgesehen sein, dass das Steuergerät einen Heizvorgang des Heizgeräts nach Beenden des Leitungsfüllvorgangs startet. Dies kann bereits bei Flammerkennung erfolgen. Dadurch kann eine manuelle Inbetriebnahme des Heizgeräts vermieden werden.

Vorzugsweise umfasst das Heizgerät einen Brenner und einen Glühstift, wobei der Brenner und der Glühstift von dem Steuergerät steuerbar sind. Dabei steuert das Steuergerät während des Leitungsfüllvorgangs den Brenner, den Glühstift und die Dosierpumpe gleichzeitig an. Vorzugsweise steuert das Steuergerät auch das Brennluftgebläse, wobei das Brennluftgebläse vorteilhaft in oder an dem Heizgerät angeordnet ist. Vorzugsweise ist das Brennluftgebläse über eine elektronische oder elektrische Leitung mit dem Steuergerät verbunden, kann aber auch über ein Bussystem, wie ein CAN- oder LIN-Bussystem mit dem Steuergerät oder einem externen Steuersystem verbunden und gesteuert sein. Hierdurch ist vorteilhaft sichergestellt, dass während des Leitungsfüllvorgangs das Steuergerät die Dosierpumpe und das Heizgerät aufeinander abgestimmt steuern kann, ohne dass es bei Flammerkennung zu einem Zeitverlust und damit zu eventuell unerwünschten Fehlern kommt, so dass vorteilhaft die Lebensdauer des Heizsystems erhöht wird. Beispielsweise tritt dadurch keine zu hohe Brennstoffkonzentration in dem Brenner bzw. an dem Glühstift auf, so dass eine unsaubere Verbrennung vorteilhaft vermieden wird. Es kann vorgesehen sein, dass das Steuergerät bei der gleichzeitigen Steuerung zumindest eines aus der Gruppe umfassend Leistung, Drehzahl und Frequenz des Brenners und/oder des Brennluftgebläses an zumindest eines aus der Gruppe umfassend Leistung, Drehzahl und Frequenz der Dosierpumpe anpasst. Es kann vorgesehen sein, dass das Steuergerät bei der gleichzeitigen Steuerung eine Leistung des Glühstiftes an zumindest eines aus der Gruppe umfassend Leistung, Drehzahl und Frequenz der Dosierpumpe anpasst.

Ein Verfahren zur automatischen Leitungsfüllung in einem brennstoffbetriebenen Heizsystem mit einem Heizgerät mit Flammerkennung umfasst die Schritte Einleiten eines Leitungsfüllvorgangs, Steuern des Heizgerätes, so dass Zündungen des Heizgeräts während des Leitungsfüllvorgangs stattfinden, und Beenden des Leitungsfüllvorgangs bei Flammerkennung. Vorteilhaft kann so ohne zusätzliche Sensoren oder eine manuelle Überprüfung der Leitungen die Leitungsbefüllung zuverlässig beendet werden, wobei der maximale Füllstand erkannt wird, wenn die Flammerkennung erfolgt.

Erfindungsgemäß ist vorgesehen, dass zwischen dem Einleiten des Leitungsfüllvorgangs und dem Steuern des Heizgeräts eine Zeitspanne liegt. Das Heizsystem umfasst erfindungsgemäß ferner Fluidleitungen, wobei die Zeitspanne die Dauer ist, die zur Füllung eines vorgegebenen minimalen Innenvolumens der Fluidleitungen benötigt wird. So kann zweckmäßig ein Füllvorgang unabhängig von der Flammerkennung gestartet werden, so dass beispielsweise die Dosierpumpe in einen höheren Leistungszustand versetzt werden kann, um die Fluidleitungen schneller zu befüllen.

Es kann ferner vorgesehen sein, dass nach einer einen Schwellenwert überschreitenden Steuerdauer des Heizgeräts das Steuern beendet wird und ein Störmodus eingeleitet wird, so dass ein Schaden an dem Heizsystem vermieden wird. Die Einleitung des Störmodus ist dabei vorzugsweise in dem Steuergerät einprogrammiert, wobei das Steuergerät die Dosierpumpe und das Heizgerät steuert, so dass das Heizgerät eine Verbrennung und die Dosierpumpe eine Förderung des Brennstoffs einstellt. Es versteht sich, dass das Heizgerät und die Dosierpumpe, anstatt den Betrieb ganz einzustellen, auch mit einer geringeren Leistung betrieben werden können, um eine Beschädigung des Heizsystems zu vermeiden.

In einer bevorzugten Weiterbildung wird eine Stillstandzeit zwischen einem früheren Heizvorgang und dem Einleiten des Leitungsfüllvorgangs zu einer Ermittlung des Schwellenwertes genutzt, so dass der Störmodus zu einem früheren oder späteren Zeitpunkt eingeleitet wird. Die Stillstandzeit ist dabei die Zeitdauer, die das Heizsystem nicht in Betrieb genommen wurde, wobei durch die Stillstandzeit auf den Brennstoffverlust in dem Heizsystem geschlossen werden kann. Beispielsweise kann bei einer langen Stillstandzeit der Leitungsfüllvorgang länger dauern, da eine größere Menge Brennstoff in die Fluidleitungen zu fördern ist, so dass der Schwellenwert für die Steuerdauer von dem Steuergerät erhöht wird.

Es kann ferner vorteilhaft vorgesehen sein, dass das Steuern des Heizgeräts nur nach einer vorgegebenen minimalen Stillstandzeit stattfindet. Eine solche vorgegebene Stillstandzeit kann beispielsweise das Resultat einer vorher stattfindenden Testreihe sein, wobei die minimale Stillstandzeit als die Zeit ermittelt wird, in der sicher eine Verflüchtigung des Brennstoffs stattfindet und daher eine Ermittlung mithilfe der Flammerkennung bei einem Leitungsfüllvorgang nötig ist.

Die Flammerkennung des erfindungsgemäßen Heizsystems wird zur Ermittlung des Füllstandes der Fluidleitungen in dem erfindungsgemäßen Heizsystem verwendet.

Die Erfindung wird nachfolgend anhand von Ausführungsbeispielen beschrieben. Es zeigen:
- Figur 1: eine schematische Darstellung einer Ausführungsform eines erfindungsgemäßen Heizsystems; und
- Figur 2: ein beispielhaftes Ablaufdiagramm eines erfindungsgemäßen Verfahrens.

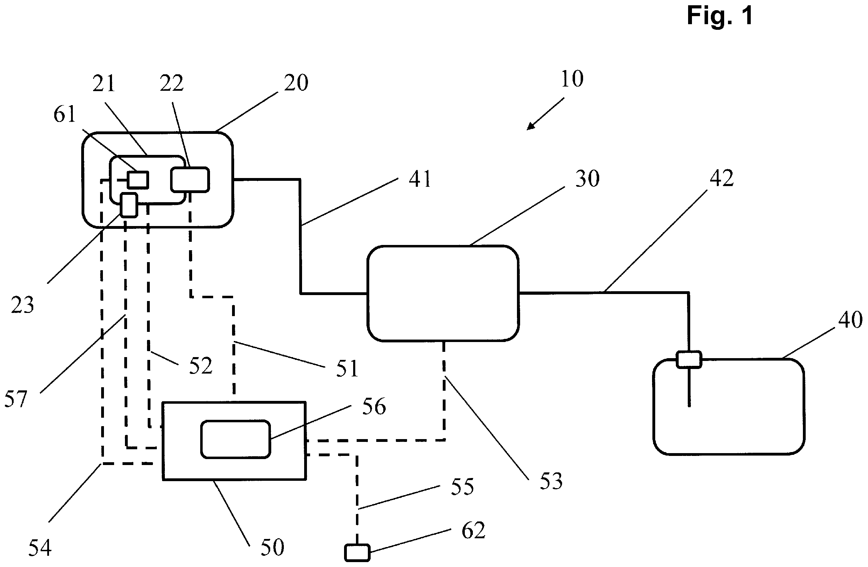

Figur 1 zeigt ein Heizsystem 10, welches beispielsweise in einem Fahrzeuginnenraum eingesetzt werden kann. Das Heizsystem 10 umfasst ein Heizgerät 20, eine Dosierpumpe 30 und einen Tank 40, wobei der Tank 40 derselbe sein kann, der auch einen Verbrennungsmotor eines Kraftfahrzeugs versorgt. Das Heizgerät 20 wird über eine als Druckleitung 41 definierte Fluidleitung durch die Dosierpumpe 30 mit einem Brennstoff versorgt, wobei die Dosierpumpe 30 den Brennstoff über die als Saugleitung 42 definierte Fluidleitung aus dem Tank 40 fördert. Peripheriegeräte 61, 62, wie zumindest ein Sensor 61 und ein Zeitgeber 62 liefern Daten über das Heizsystem, wobei das Heizsystem 10 ferner ein Steuergerät 50 umfasst, welches über elektrische Leitungen 51-55 mit dem Heizgerät 20, der Dosierpumpe 30 und den Peripheriegeräten 61, 62 verbunden ist.

Das Heizgerät 20 weist einen Brenner 21, einen Glühstift 22 und ein Brennluftgebläse 23 auf, die jeweils elektrisch steuerbar sind und durch die elektrischen Leitungen 51, 52, 57 mit dem Steuergerät 50 verbunden sind. Der Brenner 21 verbrennt dabei ein Luft- und Brennstoffgemisch, wobei der Glühstift 22 die zur Zündung des Luft- und Brennstoffgemischs benötigte Wärme liefert. Über einen Wärmetauscher an einem Abgaskanal des Heizgeräts kann die Wärme zum Betreiben eines Heizvorgangs gewonnen werden.

Die Dosierpumpe 30 ist vorzugsweise als eine elektromagnetische Hubkolbenpumpe mit einem steuerbaren Antrieb zur Förderung des Brennstoffs aus dem Tank ausgebildet. Der Antrieb kann beispielsweise als Elektromagnet mit einer Spule ausgebildet sein, wobei die Spule aufgrund einer durch das Steuergerät 50 steuerbaren Bestromung einen Hubkolben zur Förderung des Brennstoffs elektromagnetisch bewegt. Die Dosierpumpe 30 weist somit eine steuerbare Förderfrequenz auf, mit der sich der Hubkolben in der Spule vor und zurück bewegt. Es kann sich aber auch um andere Arten von Dosierpumpen handeln, beispielsweise Membran- oder Zahnradpumpen, die über einen steuerbaren, vorzugsweise elektrischen oder elektromagnetischen Antrieb verfügen und ähnlich steuerbar sind.

Das Steuergerät 50 kann Datensignale von dem Sensor 61 und dem Zeitgeber 62 empfangen und die Datensignale für eine Steuerung des Heizgeräts 20, dessen Komponenten Brenner 21, Glühstift 22 und Brennluftgebläse 23, und die Dosierpumpe 30 verwenden. Dabei laufen auf einer Prozessoreinheit 56 des Steuergeräts 50 Routinen zur Berechnung von Steuerbefehlen für die Steuerung des Heizgeräts 20, dessen Komponenten 21, 22 und der Dosierpumpe 30 ab, wobei das Steuergerät 50 über die elektrischen Leitungen 51-53, 57 an das Heizgerät 20, dessen Komponenten 21, 22, 23 und die Dosierpumpe 30 Steuersignale für die Steuerung versendet. Es versteht sich, dass das Steuergerät 50 eine Bestromung des Antriebs der Dosierpumpe 30, beispielsweise der Spule oder des Elektromotors, veranlassen kann. Es ist auch möglich, dass das Heizgerät 20 und die Dosierpumpe 30 jeweils eine eigene Steuereinheit aufweisen, wobei die Steuereinheiten die von dem Steuergerät 50 gesandten Steuersignale interpretieren und ihrerseits die Dosierpumpe und das Heizgerät und dessen Komponenten steuern. Das Steuergerät 50 kann mittelbare Datensignale auch von einer zentralen Steuereinrichtung über ein CAN- oder LIN-Bussystem empfangen. Es versteht sich, dass das Steuergerät 50 integraler Bestandteil des Heizgerätes 20 oder als selbstständiger Bauteil ausgebildet sein kann.

Der Sensor 61 ist ein Temperatursensor, wobei eine Temperatur in dem Heizgerät 20 von dem Sensor 61 gemessen wird und deren Wert als Datensignal an das Steuergerät 50 gesendet wird. Aus dem Wert kann durch das Steuergerät 50 eine Flammerkennung erfolgen: Liegt der Wert der Temperatur über einem bestimmten Wert, wird von dem Steuergerät 50 eine Flamme angenommen. Es versteht sich, dass die Datensignale von Sensoren verschickte Signale sein können, wobei vorgesehen sein kann, dass die Datensignale Werte für Temperatur, Druck, Strömungsgeschwindigkeit, Durchflussmenge, Partikelrate und/oder Dichte sind. Die mittelbaren Datensignale umfassen ebenfalls Sensorsignale und/oder ein Zeitsignal, die von Sensoren und/oder Zeitgebern an die zentrale Steuereinrichtung und von dieser an das Steuergerät übermittelt werden.

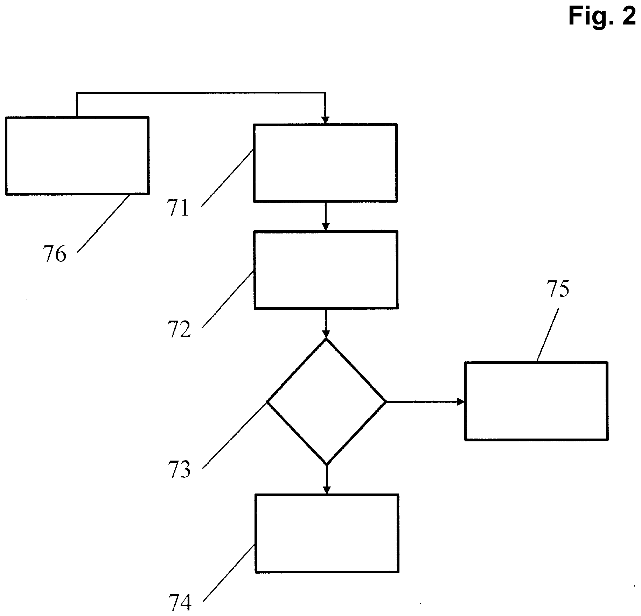

Die Steuerung des Heizsystems 10 erfolgt dabei wie Figur 2 schematisch dargestellt: In einem von dem Steuergerät 50 auslesbaren Speicher (nicht gezeigt) sind die Routinen abgespeichert. Eine Routine "Leitungsbefüllung" 71 wird in dem Verfahren in einem ersten Schritt ausgeführt, wobei ein Leitungsfüllvorgang eingeleitet wird. Dabei steuert das Steuergerät 50 die Dosierpumpe 30, so dass der Brennstoff aus dem Tank 40 über die Fluidleitungen 41, 42 zu dem Heizgerät gefördert wird. Die Routine "Leitungsbefüllung" 71 läuft unabhängig von der Flammerkennung ab.

Durch einen auf dem Steuergerät gespeicherten Wert ist festgelegt, wie lange eine Zeitspanne zwischen dem Einleiten des Leitungsfüllvorgangs und dem Steuern des Heizsystems 10 maximal dauern darf. Die Zeitspanne ist die Dauer, die zur Füllung eines minimalen Innenvolumens der Fluidleitungen 41, 42 benötigt wird. Es versteht sich, dass das Steuern zum Erhitzen oder das Steuern von Zündversuchen des Brennstoffs oder des Luft- und Brennstoffgemischs auch aufgrund anderer Werte erfolgen kann, beispielsweise bei vorhandenem Drucksensor aufgrund einer Druckmessung am Leitungsende oder aufgrund einer von der Dosierpumpe zu erbringenden Leistung zur Förderung des Brennstoffs.

Sobald das Steuern des Heizsystems 10 einsetzt, wird eine Routine "Leitungsbefüllung mit automatischer Flammerkennung" 72 aufgerufen. Nunmehr werden die Daten des Sensors 61 zur Flammerkennung 73 herangezogen. Erfolgt eine Flammerkennung 71 wird eine Routine "Heizungsstart" aufgerufen, wodurch ein Heizvorgang des Heizsystems 10 bzw. des Heizgeräts 20 erfolgt. Erfolgt keine Flammerkennung innerhalb einer vorgegebenen Zeit wird die Routine "Leitungsbefüllung mit automatischer Flammerkennung" 72 abgebrochen und eine Fehlermeldung 75 ausgegeben.

Vor Einleiten der Routine "Leitungsbefüllung" 71 kann eine Routine "Trockenzeitermittlung" 76 aufgerufen werden, wobei die Routine "Trockenzeitermittlung" ein von dem Zeitgeber 62 versandtes Zeitsignal verwendet, das einen Zeitwert übermittelt, der eine von dem Zeitgeber 62 seit einem vorherigen Heizvorgang vergangene Stillstandzeit des Heizsystems darstellt. Dieses Zeitsignal wird zu einer Berechnung der Zeitspanne zwischen dem Einleiten des Leitungsfüllvorgangs und dem Steuern des Heizsystems 10 herangezogen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Heizsystem
- 20: Heizgerät
- 21: Brenner
- 22: Glühstift
- 23: Brennluftgebläse
- 30: Dosierpumpe
- 40: Tank
- 41: Leitungssegment, Druckleitung
- 42: Leitungssegment, Saugleitung
- 50: Steuergerät
- 51: Elektrische Leitung
- 52: Elektrische Leitung
- 53: Elektrische Leitung
- 54: Elektrische Leitung
- 55: Elektrische Leitung
- 56: Prozessoreinheit
- 57: Elektrische Leitung
- 61: Flammerkennungssensor
- 62: Zeitgeber
- 71: Routine "Leitungsbefüllung"
- 72: Routine "Leitungsbefüllung mit automatischer Flammerkennung"
- 73: Abfrage "Flammerkennung"
- 74: Routine "Heizungsstart"
- 75: Routine "Fehlererkennung"
- 76: Routine "Trockenzeitermittlung"

## Patentansprüche

1. Heizsystem (10) mit Flammerkennung, umfassend
- ein Heizgerät (20),
- eine mit dem Heizgerät (20) in Fluidverbindung stehende Dosierpumpe (30), so dass ein Brennstoff zumindest bei einem Leitungsfüllvorgang zu dem Heizgerät (20) förderbar ist,
- ein Steuergerät (50) zur Steuerung des Heizgeräts (20) und der Dosierpumpe (30),
wobei das Steuergerät (50) die Dosierpumpe (30) in Abhängigkeit der Flammerkennung während des Leitungsfüllvorgangs steuert und
- wobei das Steuergerät (50) durch Steuern der Dosierpumpe (30) den Leitungsfüllvorgang nach der Flammerkennung beendet,
**dadurch gekennzeichnet, dass** ein Wert eines minimalen Füllvolumens dem Steuergerät vorgegeben ist, und dass der Leitungsfüllvorgang nach einem Erreichen des minimalen Füllvolumens in Abhängigkeit von der Flammerkennung erfolgt.

2. Heizsystem nach Anspruch 1, **dadurch gekennzeichnet, dass** eine Stillstandzeit durch einen Zeitmesser (62) zwischen einem früheren Heizvorgang und einem Einleiten des Leitungsfüllvorgangs des Heizsystems speicherbar ist, und dass das Steuergerät (50) die Dosierpumpe (30) in Abhängigkeit der Stillstandzeit steuert.

3. Heizsystem nach Anspruch 2, **dadurch gekennzeichnet, dass** ein Störmodus zur Schadensreduzierung durch das Steuergerät (50) einleitbar ist, und dass der Störmodus bei Überschreiten eines vorgegebenen minimalen Wertes der Stillstandzeit durch das Steuergerät (50) ausgesetzt ist.

4. Heizsystem nach Anspruch 3, **dadurch gekennzeichnet, dass** das Steuergerät bei der gleichzeitigen Steuerung zumindest eines aus der Gruppe umfassend Leistung, Drehzahl und Frequenz des Heizgeräts (20) an zumindest eines aus der Gruppe umfassend Leistung, Drehzahl und Frequenz der Dosierpumpe (30) anpasst.

5. Verfahren zur automatischen Leitungsfüllung in einem mit Brennstoff betriebenen Heizsystem (10) mit Flammerkennung, umfassend die Schritte
- Einleiten eines Leitungsfüllvorgangs,
- Steuern des Heizsystems (10), so dass ein Erhitzen oder Zündungsversuche des Brennstoffes während des Leitungsfüllvorgangs stattfinden, und
- Beenden des Leitungsfüllvorgangs bei Flammerkennung
**dadurch gekennzeichnet, dass** zwischen dem Einleiten des Leitungsfüllvorgangs und dem Steuern des Heizsystems (10) eine Zeitspanne liegt und
dass das Heizsystem (10) Fluidleitungen (41, 42) umfasst, wobei die Zeitspanne die Dauer ist, die zur Füllung eines vorgegebenen minimalen Innenvolumens der Fluidleitungen (41, 42) benötigt wird.

6. Verfahren nach Anspruch 5, **dadurch gekennzeichnet, dass** nach einer einen Schwellenwert überschreitenden Steuerdauer des Heizsystems (10) das Steuern beendet wird und ein Störmodus eingeleitet wird, so dass ein Schaden an dem Heizsystem (10) vermieden wird.

7. Verfahren nach Anspruch 6, **dadurch gekennzeichnet, dass** eine Stillstandzeit zwischen einem früheren Heizvorgang und dem Einleiten des Leitungsfüllvorgangs zu einer Ermittlung des Schwellenwertes genutzt wird, so dass der Störmodus zu einem früheren oder späteren Zeitpunkt eingeleitet wird.

8. Verfahren nach Anspruch 6 oder 7, **dadurch gekennzeichnet, dass** das Steuern des Heizsystems (10) nur nach einer vorgegebenen minimalen Stillstandzeit stattfindet.

9. Verwendung der Flammerkennung des Heizsystems (10) nach Anspruch 1 zur Ermittlung eines Füllstandes von Leitungen in dem Heizsystem (10) nach Anspruch 1.

## Claims

1. A heating system (10) comprising a flame detection system including
- a heating device (20),
- a metering pump (30) fluidly connected to the heating device (20) so that fuel can be delivered to the heating device (20) at least during a line filling process,
- a control device (50) for controlling the heating device (20) and the metering pump (30),
wherein the control device (50) controls the metering pump (30) depending on the flame detection during the line filling process, and
- wherein the control device (50) terminates the line filling process by controlling the metering pump (30) after the flame detection,
**characterised in that** a value of a minimum filling volume is preset for the control device, and **in that** the line filling process is initiated depending on the flame detection after the minimum filling volume is reached.

2. The heating system according to claim 1, **characterised in that** a downtime between a former heating process and an initiation of the line filling process of the heating system is storable by a timing device (62), and **in that** the control device (50) controls the metering pump (30) depending on the downtime.

3. The heating system according to claim 2, **characterised in that** an interference mode can be initiated by the control device (50) for damage reduction, and **in that** the interference mode is suspended by the control device (50) if a predetermined minimum value of the downtime is exceeded.

4. The heating system according to claim 3, **characterised in that** the control device adapts at least one element among the group comprised of output, speed, and frequency of the heating device (20) to at least one element among the group comprised of output, speed, and frequency of the metering pump (30) during the simultaneous control.

5. A method for automatic line filling in a heating system (10) operated by fuel comprising flame detection, comprising the steps
- initiation of a line filling process,
- controlling the heating system (10) so that heating or ignition attempts of the fuel take place during the line filling process, and
- terminating the line filling process in case of flame detection,
**characterised in that** there is an interval between the initiation of the line filling process and controlling the heating system (10), and
that the heating system (10) comprises fluid lines (41, 42), wherein the interval is the period required for filling a preset minimum interior volume of the fluid lines (41,42).

6. The method according to claim 5, **characterised in that** the control is terminated after the control period of the heating system (10) exceeds a threshold value, and **in that** an interference mode is initiated so that damage to the heating system (10) is avoided.

7. The method according to claim 6, **characterised in that** a downtime between a previous heating process and the initiation of the line filling process is used to detect the threshold value so that the interference mode is initiated at an earlier or later point in time.

8. The method according to claim 6 or 7, **characterised in that** the control of the heating system (10) will only take place after a predetermined minimum downtime.

9. Utilisation of the flame detection of the heating system (10) according to claim 1 for detecting a filling state of lines in the heating system (10) according to claim 1.

## Revendications

1. Système de chauffage (10) avec détection de flamme, comprenant:
- un appareil de chauffage (20),
- une pompe de dosage (30) en liaison fluidique avec l'appareil de chauffage (20) de telle sorte qu'un carburant puisse être refoulé vers l'appareil de chauffage (20) au moins dans le cas d'une opération de remplissage de conduite,
- un appareil de commande (50) pour commander l'appareil de chauffage (20) et la pompe de dosage (30),
l'appareil de commande (50) commandant la pompe de dosage (30) en fonction de la détection de flamme pendant l'opération de remplissage de conduite et
- l'appareil de commande (50), par commande de la pompe de dosage (30), terminant l'opération de remplissage de conduite après la détection de flamme,
**caractérisé en ce qu'**une valeur d'un volume de remplissage minimal est prédéfinie pour l'appareil de commande, et **en ce que** l'opération de remplissage de conduite s'effectue en fonction de la détection de flamme après une atteinte du volume de remplissage minimal.

2. Système de chauffage selon la revendication 1, **caractérisé en ce qu'**un temps d'arrêt peut être mémorisé par un chronomètre (62) entre une opération de chauffage antérieure et un déclenchement de l'opération de remplissage de conduite du système de chauffage, et **en ce que** l'appareil de commande (50) commande la pompe de dosage (30) en fonction du temps d'arrêt.

3. Système de chauffage selon la revendication 2, **caractérisé en ce qu'**un mode de panne pour réduire les endommagements peut être déclenché par l'appareil de commande (50), et **en ce que** le mode de panne est suspendu en cas de dépassement d'une valeur minimale prédéfinie du temps d'arrêt par l'appareil de commande (50).

4. Système de chauffage selon la revendication 3, **caractérisé en ce que** l'appareil de commande, lors de la commande simultanée d'au moins l'un parmi le groupe comprenant la puissance, la vitesse de rotation et la fréquence de l'appareil de chauffage (20), s'adapte au moins à l'un du groupe comprenant la puissance, la vitesse de rotation et la fréquence de la pompe de dosage (30).

5. Procédé pour le remplissage automatique de conduite dans un système de chauffage (10) fonctionnant avec du carburant avec détection de flamme, comprenant les étapes suivantes:
- déclenchement d'une opération de remplissage de conduite,
- commande du système de chauffage (10) de sorte qu'un chauffage ou des tentatives d'allumage du carburant aient lieu pendant l'opération de remplissage de conduite, et
- achèvement de l'opération de remplissage de conduite à la détection d'une flamme,
**caractérisé en ce qu'**entre le déclenchement de l'opération de remplissage de conduite et la commande du système de chauffage (10) se produit un intervalle de temps et
**en ce que** le système de chauffage (10) comprend des conduites de fluide (41, 42), l'intervalle de temps étant la durée nécessaire pour le remplissage d'un volume intérieur minimal prédéfini des conduites de fluide (41, 42).

6. Procédé selon la revendication 5, **caractérisé en ce qu'**après une durée de commande du système de chauffage (10) dépassant une valeur seuil, la commande est terminée et un mode de panne est déclenché de telle sorte qu'un endommagement du système de chauffage (10) soit évité.

7. Procédé selon la revendication 6, **caractérisé en ce qu'**un temps d'arrêt entre une opération de chauffage antérieure et le déclenchement d'une opération de remplissage de conduite est utilisé pour déterminer la valeur seuil de telle sorte que le mode de panne soit déclenché à un instant antérieur ou ultérieur.

8. Procédé selon la revendication 6 ou 7, **caractérisé en ce que** la commande du système de chauffage (10) n'a lieu qu'après un temps d'arrêt minimal prédéfini.

9. Utilisation d'une détection de flamme du système de chauffage (10) selon la revendication 1 pour déterminer un état de remplissage de conduites dans le système de chauffage (10) selon la revendication 1.
